**Europäisches Patentamt**

(19) **European Patent Office**

**Office européen des brevets**

(11) Veröffentlichungsnummer: **0 076 231**
A2

(12) # EUROPÄISCHE PATENTANMELDUNG

(21) Anmeldenummer: **82810356.4**

(22) Anmeldetag: **27.08.82**

(51) Int. Cl.³: **B 23 P 21/00**
**B 23 Q 7/04**

(30) Priorität: **24.09.81 CH 6165/81**

(43) Veröffentlichungstag der Anmeldung:
**06.04.83 Patentblatt 83/14**

(84) Benannte Vertragsstaaten:
**AT BE CH DE FR GB IT LI LU NL SE**

(71) Anmelder: **Schäfer, Franz**
**Alex-Moser-Strasse 45**
**CH-2503 Biel(CH)**

(71) Anmelder: **Seckler, Robert**
**Grünweg 6**
**CH-2502 Biel(CH)**

(72) Erfinder: **Schäfer, Franz**
**Alex-Moser-Strasse 45**
**CH-2503 Biel(CH)**

(72) Erfinder: **Seckler, Robert**
**Grünweg 6**
**CH-2502 Biel(CH)**

(74) Vertreter: **Frauenknecht, Alois J. et al,**
**c/o PPS Polyvalent Patent Service AG Fohrhölzlistrasse**
**19**
**CH-5443 Niederrohrdorf(CH)**

(54) **Verfahren und Einrichtung zum seriellen Bearbeiten und/oder zur Montage von Werkstücken.**

(57) Bei der Fertigung von mechanischen und elektrischen Serienteilen- und Geräten wird einerseits die Forderung nach höchster Rationalisierung und andererseits nach möglichst einfacher und wirtschaftlicher Betriebsumstellung erhoben. Es finden daher in zunehmendem Masse Montage- und Bearbeitungs- automaten Einsatz, welche Industrieroboter zur Ausführung von Übergabe/Montage-Arbeiten etc. aufweisen, welchen die erforderlichen Einzelteile individuell zugeführt werden.

Die Flexibilität solcher Systeme wird durch ein Verfahren mit einer taktmässig gesteuerten, normierten Einrichtung zur Zubringung von Einzelteilen (11) entlang zu einer ebenfalls taktmässig gesteuerten Werkstückträgervorrichtung (13) erhöht.

Als weitere Variante wird die Einrichtung (11) mit Paletten (12), welche n-Werkstücke (14) aufweisen, ausgerüstet. Durch n-Arbeitsstellen lassen sich die Bearbeitungsvorgänge soweit aneinander reihen, dass schlussendlich ein fertiges Produkt in die Paletten (12) zurückgeführt werden kann.

Vorteilhafte Einrichtungen zur Durchführung der Verfahren weisen Werkstückträgervorrichtungen (13) mit mindestens zwei identischen Werkstückträgern (15) auf. Eine Steigerung der Wirtschaftlichkeit des Systems lässt sich durch einen Manipulator (2) realisieren, welcher sequentiell angesteuert ist.

./...

Croydon Printing Company Ltd

FIG.1

- 1 -

## Verfahren und Einrichtung zum seriellen Bearbeiten und/oder zur Montage von Werkstücken

Die vorliegende Erfindung betrifft ein Verfahren zur seriellen Bearbeitung und/oder Montage von aus Einzelteilen aufgebauten Werkstücken, wobei eine Einrichtung die Einzelteile zubringt, eine programmierbare Übergabe/Montageeinheit mit mindestens drei Freiheitsgraden vorhanden ist und eine Werkstückträgervorrichtung taktmässig gesteuert wird sowie eine Einrichtung zur Durchführung des Verfahrens.

In der Fertigung von mechanischen und elektrischen Serienteilen- und Geräten stehen seit geraumer Zeit Montage- und Bearbeitungsautomaten im Einsatz, welche nach dem Verfahren entsprechend dem Oberbegriff der Ansprüche 1 und 2 arbeiten. Derartige Automaten sind im Falle von älteren Spezialmaschinen meist mit einer festen Programmsteuerung und im Falle von neueren, an fabrikationsmässige Änderungen leichter anpassbare Automaten oft mit einer frei programmierbaren Steuerung mit Mikroprozessoren ausgerüstet. Die Zuführung vorfabrizierter Einzelteile erfolgt hier meist über lose Taktsysteme mit Flach- oder Linienmagazinen oder über geordnete Zubringersysteme zu den einzelnen Arbeitsstellen. Diese Zubringersysteme führen die Einzelteile mehr oder weniger senkrecht zur Bewegungsrichtung der Werkstückträger zu.

Dem Bekannten ist der Nachteil eigen, dass die Anpassungsfähigkeit der Automaten an Fabrikationsänderungen und/oder Umstellungen auch zu Änderungen im Zubringersystem führen und daher umständlich und/oder kostenintensiv ist.

Es ist daher Aufgabe der Erfindung, ein flexibles Verfahren sowie eine Einrichtung zu schaffen, welche rasche und kostengünstige Betriebsumstellungen ermöglichen, ohne dass deren Wirtschaftlichkeit im Vergleich zum Bekannten beeinträchtigt ist.

Diese Aufgabe wird dadurch gelöst, dass die Einzelteile in einer geordneten und gerichteten Lage einer Entnahmestation zugeführt werden, dass hier die gerichteten Teile von einem Manipulator der Übergabe/Montageeinheit entnommen und positionsrichtig in der Reihenfolge der Bearbeitungs- und/oder Montageschritte an die Werkstückträgervorrichtung abgegeben werden, wobei sich die Einrichtung zur Zubringung der Einzelteile entlang zur taktmässig gesteuerten Werkstückträgervorrichtung erstreckt.

Durch die im Kennzeichen des Anspruchs 1 aufgeführte Zubringung der Einzelteile entlang der taktmässig gesteuerten Werkstückträgervorrichtung ergibt sich eine optimale Kombination einer Übergabe/Montageeinheit (sogenannter mehrachsiger Industrieroboter) mit einem an sich ebenfalls bekannten Zubringersystem. Dabei werden von einem Trasse aus die Einzelteile an einem Ort (Entnahmestation) entnommen und der Werkstückträgereinrichtung (Rundtisch, Kettenförderer etc.) gerichtet und gezielt zugeführt. Die Herstellungsoperationen (Bearbeitung und/oder Montage) erfolgen anschliessend in der vorgegebenen Reihenfolge, ohne dass weitere Einzelteile zugeführt werden müssen.

Eine weitere Lösung nach Anspruch 2 ist dadurch gekennzeichnet, dass die Einzelteile in einer geordneten und gerichteten Lage, taktmässig, periodisch wiederholend in jeweils einer Palette mit einer Anzahl von mindestens n-gleichen Einzelteilen in wenigstens einer Arbeitsstrecke und wenigstens einer Entnahmestation zugeführt werden, dass diese Einzelteile positionsrichtig in der Reihenfolge der Bearbeitungs-

und/oder Montageschritte angeordnet werden, wobei n der Anzahl der in Betrieb stehenden Arbeitsstellen der taktmässig gesteuerten Werkstückträgervorrichtung entspricht.

Diese Lösung erlaubt, vorverpackte oder vorsortierte Einzelteile hintereinander entsprechend den Bearbeitungsschritten geordnet direkt der Werkstückträgervorrichtung zuzuführen.

Durch das Vorhandensein von mehr als n-Einzelteilen in einer Palette ergibt sich die Möglichkeit, fehlerhafte Werkstücke durch Reserveteile zu ergänzen, ohne dass Betriebsunterbrüche an den zum Werkstückträger peripheren n-Arbeitsstellen entstehen.

Eine Einrichtung zur Durchführung des Verfahrens nach Anspruch 6 ist so ausgebildet, dass die Werkstückträgervorrichtung eine umlaufende Takteinrichtung mit wenigstens zwei identischen Werkstückträgern ist.

Diese Ausgestaltung dient der gleichzeitigen Bearbeitung und/oder Montage von Werkstücken in einer Aufspannung.

In den weiteren abhängigen Ansprüchen sind vorteilhafte Weiterbildungen der Erfindung beschrieben.

Das Verfahren nach Anspruch 3 erweist sich insbesondere zur Verkettung mehrerer Einrichtungen (Automaten) miteinander als vorteilhaft.

Ein Verfahren nach Anspruch 4 erlaubt Bearbeitungs- und Montagearbeiten auf einer ersten Einrichtung bis zur Palettisierung (Vorverpackung) oder bis zur direkten oder gepufferten Übergabe an eine zweite Einrichtung - zur weiteren Bearbeitung - zu vollziehen.

Die Weiterbildung nach Anspruch 5 erweist sich als besonders günstig in Fällen, in denen sämtliche Bearbeitungs- und/oder Montageschritte auf einer einzigen Einrichtung vollzogen werden.

Eine Einrichtung nach Anspruch 7 mit einer Ausrüstung mit einzeln einschaltbaren Werkzeugen dient der Erhöhung der Einsatzmöglichkeiten.

Nach Anspruch 8 können entsprechend dem an der Werkstückträgervorrichtung peripher vorhandenen Raum nahezu beliebig viele und unterschiedliche Stationen gleichzeitig auf die Werkstücke einwirken.

Der Einbezug eines manuellen Arbeitsplatzes gemäss Anspruch 9 in eine Einrichtung kann deren Universalität erheblich steigern und ist aufgrund der einseitig angeordneten Zubringer-Einrichtung leicht möglich.

Durch eine auswechselbare Werkstückträgervorrichtung nach Anspruch 10 lassen sich in einfachster Weise Fabrikationsumstellungen und/oder eine Aenderung der Aufspannbedingungen realisieren.

Eine Weiterbildung der Übergabe/Montageeinheit zur Aufnahme beliebiger Werkzeuge gemäss Anspruch 11 erlaubt deren optimale Ausnutzung und kann der Einsparung peripherer Stationen dienen.

Die Einrichtung nach Anspruch 12 erweist sich vorteilhaft durch ihr rasches Positionieren, in einem ersten Schritt entsprechend den Raumkoordinaten und in einem zweiten Schritt durch den Manipulator an der Übergabe/Montageeinheit. Dieser vermag mit einer einfachen Steuerung jeweils

**0076231**

- 5 -

einen Bewegungsvorgang nach dem anderen zu vollziehen, wobei als vierter Freiheitsgrad beispielsweise ein Schwenken um die Z-Achse zu verstehen ist.

Eine Ausgestaltung nach Anspruch 13 reduziert durch den Einsatz elektromagnetischer Blockiersysteme den gesamten Steuerungsaufwand für den Manipulator beträchtlich.

Nachfolgend soll anhand von Zeichnungen ein Ausführungsbeispiel näher erläutert werden.

Es zeigt

Fig. 1 eine Einrichtung zum seriellen Bearbeiten und/oder der Montage von Werkstücken nach dem erfindungsgemässen Verfahren arbeitend, in perspektivischer Darstellung,

Fig. 2 eine zu Fig. 1 analoge Einrichtung in einer Ansicht von oben,

Fig. 3 die Einrichtung Fig. 2 mit aufgesetzter Abdeckhaube in einer Seitenansicht,

Fig. 4 einen Manipulator einer Einrichtung nach Fig. 1-3 mit seinen durch Pfeilen charakterisierten Bewegungsmöglichkeiten und

Fig. 5 einen Längsschnitt durch einen in gestreckter Lage dargestellten Manipulator Fig. 4.

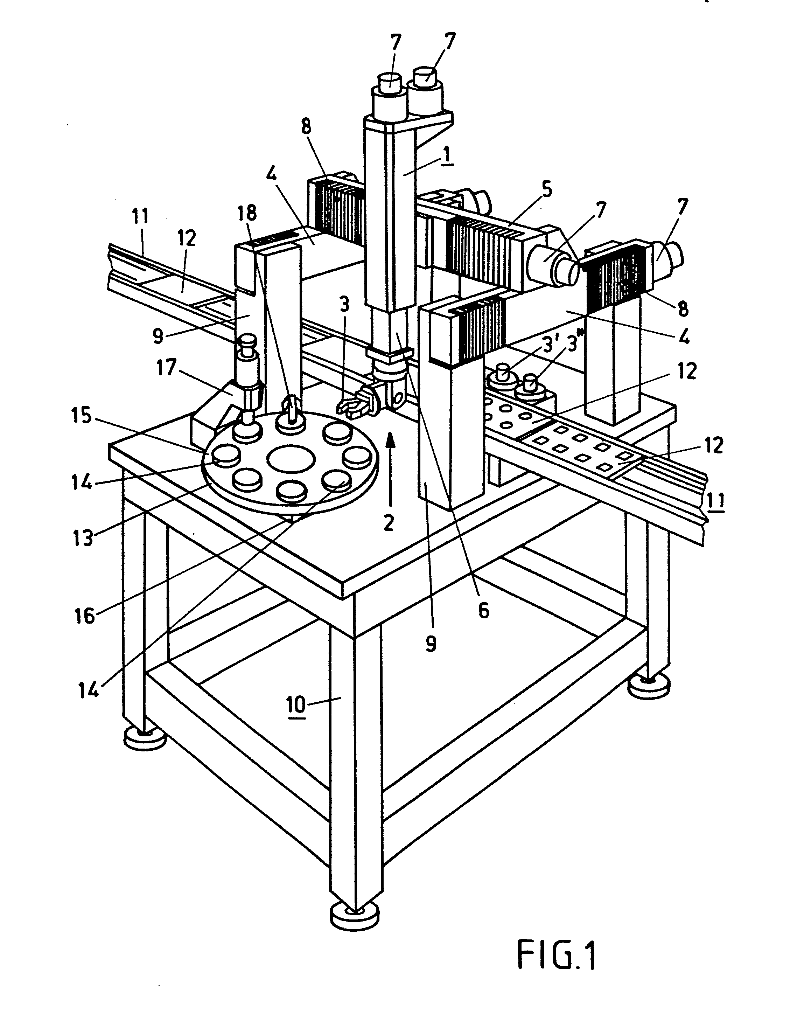

Gemäss Fig. 1 ist eine Übergabe/Montageeinheit (Industrieroboter) mit 1 bezeichnet. Diese Übergabe/Montageeinheit 1 besitzt zur Ausführung von Übergabe-, Montage- und leichten

- 6 -

Bearbeitungsoperationen einen frei programmierbaren Manipulator 2 mit einer Greifzange als ein mögliches auswechselbares Werkzeug 3. Reservewerkzeuge 3' und 3'' (z.B. Schraubenzieher, Elektromagnet) befinden sich auf der gegenüberliegenden Seite des Manipulators 2 und können leicht im Rahmen des Arbeitsprogramms in an sich bekannter Weise ausgewechselt werden. Die Übergabe/Montageeinheit 1 ist in bekannter Weise an einem in Y-Richtung steuerbaren Schlitten 5 angeordnet, welcher seinerseits durch zwei zueinander parallele Schlitten 4 beweglich angeordnet ist. Zur Positionierung dienen gleichartige Servomotoren 7, die ebenfalls zur Höhenverstellung 6 (Z-Richtung) des Manipulators 2 und zur Ausführung seiner Schwenkbewegungen dienen. Sämtliche Schlitten sind durch Prismenführungen realisiert und durch Faltenbälge 8 vor Umwelteinflüssen geschützt. Vier massive Ständer 9 tragen die ganze Einheit 1 und sind auf einem stabilen Grundtisch 10 montiert.

Zwischen den Ständern 9 verläuft die Schiene einer Einrichtung zur Zubringung von Einzelteilen 11 mit darin befindlichen Paletten 12 mit jeweils n = 8 durch Kreise und Quadrate symbolisierten Einzelteilen.

Eine Werkstückträgervorrichtung 13 - ein Rundtisch mit motorischem Antrieb 16 - ist vor der Übergabe/Montageeinheit 1 angeordnet und weist in als konische Bohrungen ausgebildeten n = 8 Werkstückträgern 15 eingesetzte n = 8 Werkstücke 14 auf.

Sämtliche die zur Durchführung des erfindungsgemässen Verfahrens notwendigen Einzelkomponenten sind an sich notorisch bekannt. Als Einrichtung zur Zubringung von Einzelteilen 11 hat sich eine solche von der Firma Bosch AG (Typ FMS) bewährt.

Die Einrichtung 11 verläuft entlang der Werkstückträgervorrichtung 13, d.h. parallel zu deren Bewegungsrichtung und kann mit dieser, je nach Werkstückfluss im Gleichlauf oder gegensinnig zu dieser sein.

Die Einheit zur Zubringung von Einzelteilen 11 ist als Stauband ausgebildet und verbringt jeweils schrittweise eine Palette 12 zu einer Entnahmestation mit Positioniereinrichtung, welche sich auf der kürzesten Verbindung zur Werkstückträgervorrichtung 13 befindet, und durch die Übergabe/ Montageeinheit 1 sukzessive entleert und deren Inhalt auf der Werkstückträgervorrichtung 13 positioniert wird.

Entsprechend der Anzahl n = 8 Einzelteile pro Palette weist die Werkstückträgervorrichtung 13 n = 8 Arbeitsstellen auf, d.h. neben derjenigen des Positionierens durch den Manipulator 2 sieben Bearbeitungsstationen. Aus zeichnerischen Gründen sind lediglich die Bearbeitungsstation 17, welche einen Pressvorgang und die Bearbeitungsstation 18, welche einen Lötvorgang ausübt, dargestellt.

Die Paletten 12 können aus in Einzelfällen Sicherheitsgründen Reserveteile beinhalten, so dass schlussendlich mehr Teile vorhanden sind als Werkstückträger 15.

Das am Beispiel einer Teilfabrikation von elektronischen Uhren beschriebene Verfahren mit n = 8 Arbeitsstellen kann nahezu beliebig erweitert werden, so dass bei entsprechender Anzahl Arbeitsstellen, eventuell unter Einbezug eines manuellen Arbeitsplatzes, schlussendlich eine fertigmontierte und funktionsfähige Uhr in die Einrichtung zur Zubringung von Einzelteilen 11 zurückgeführt wird.

In den nachfolgenden Figuren sind gleiche Bauteile mit glei-

chen Bezugzeichen versehen.

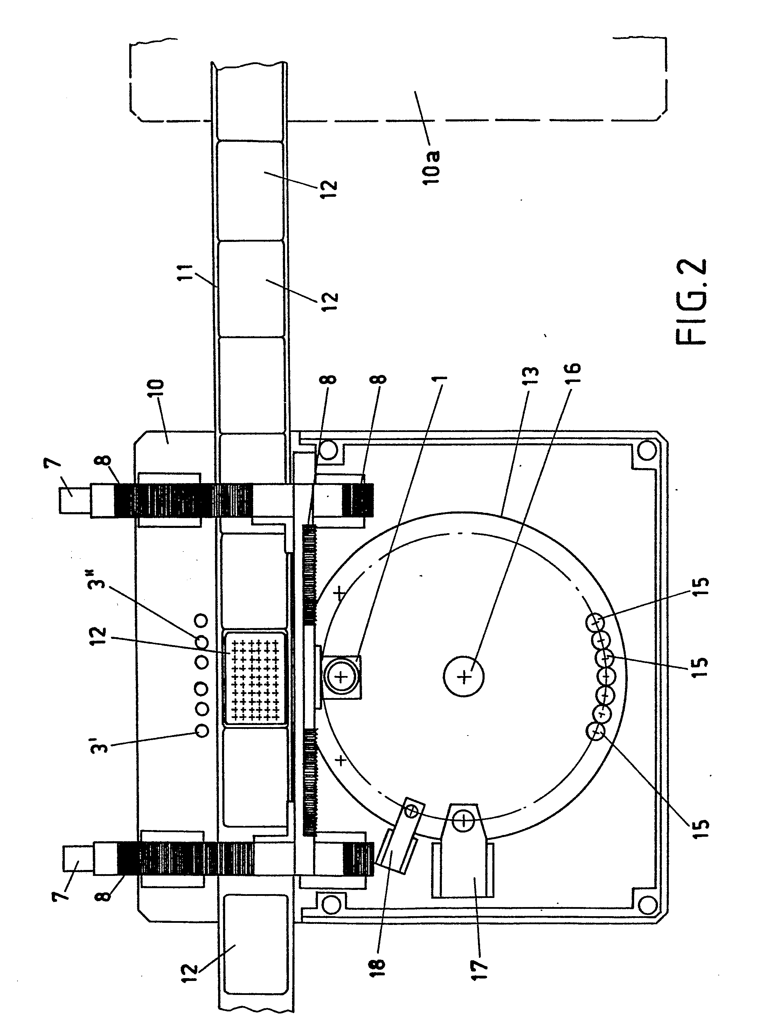

Die Darstellung Fig. 2 zeigt eine Einrichtung zur seriellen Bearbeitung und/oder der Montage mit n = 60 Arbeitsstellen. Entsprechend grösser kann die Anzahl notwendiger Reserve-Werkzeuge 3' bis 3'' sein.

Zudem ist diese Einrichtung mit einer ebensolchen linear verkettet, was durch den gestrichelt gezeichneten weiteren Grundtisch 10a symbolisiert ist.

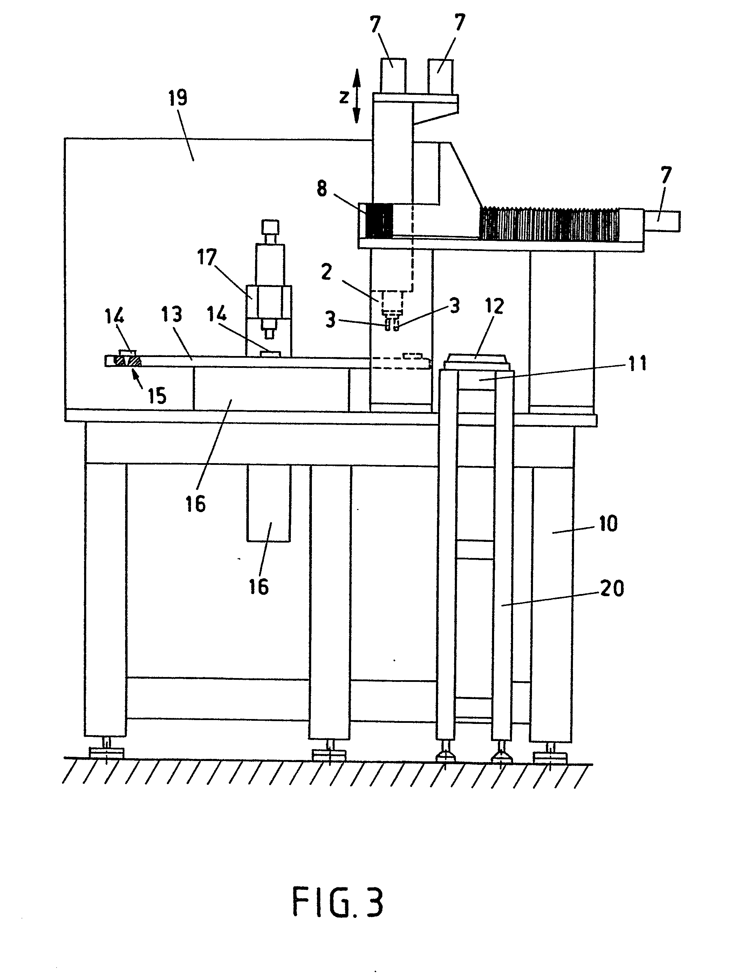

Aus Fig. 3 lassen sich die proportionalen Abmessungen der Einrichtung zu Fig. 2 erkennen. Als weitere Einzelheiten sind die im Schnitt dargestellten konischen Bohrungen der Werkstückträger 15, die relativen äusseren Abmessungen der Werkstückträgervorrichtung 13 mit deren Antrieb 16 sowie die leicht austauschbare und über Ständer 20 positionierte Einrichtung zur Zubringung von Einzelteilen 11 ersichtlich. Eine Abdeckhaube 19 schützt die empfindlichen Arbeitsstellen und Werkstücke vor störenden äusseren Einflüssen und symbolisiert gleichzeitig den automatischen Betrieb des gesamten Systems.

Zur Reduktion des Programmier- und Steuerungsaufwandes erfolgt der Antrieb des Manipulators 2 sequentiell, d.h. jeweils nur eine Bewegungsrichtung wird gleichzeitig angesteuert.

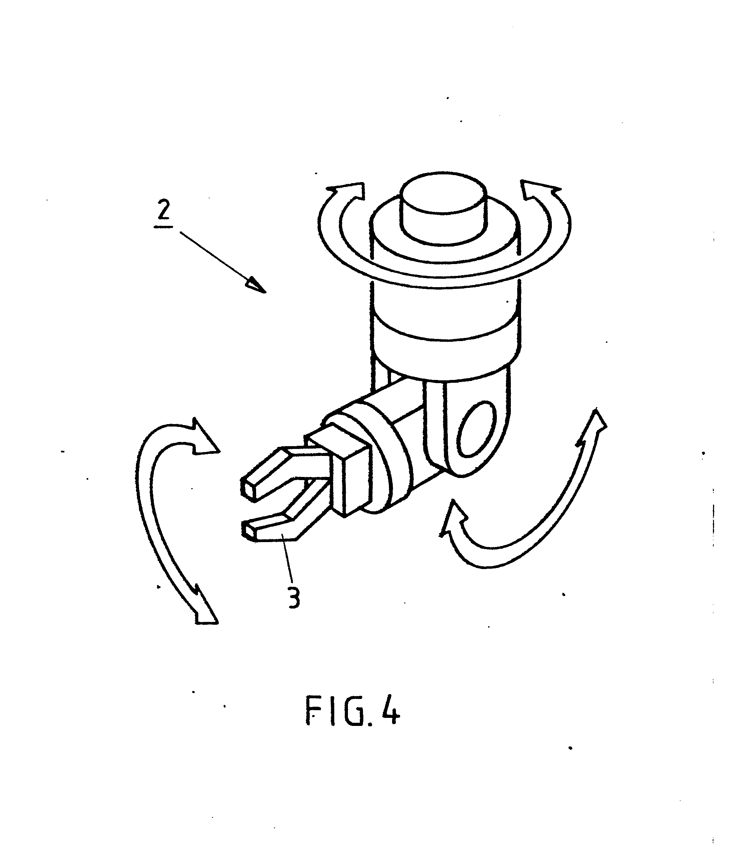

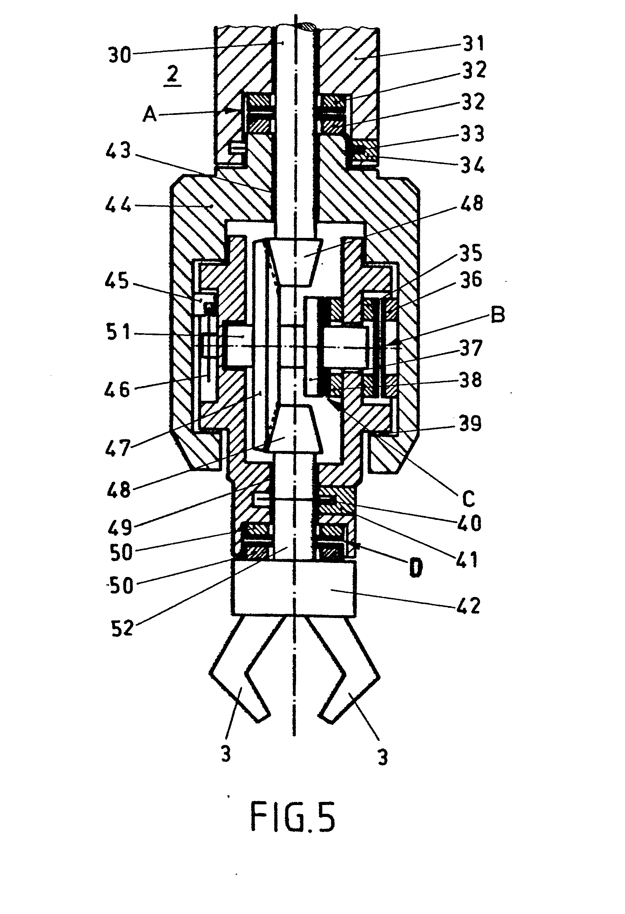

Ein bevorzugtes Ausführungsbeispiel eines Manipulators 2 ist in Fig. 5 in einer gegenüber Fig. 4 gestreckten Lage im Schnitt in seinen Einzelheiten ersichtlich.

Eine Antriebswelle 30 eines Servomotors 7 ist zentral in ein Unterteil 31, welches die Z-Achse des Manipulators bildet, eingeführt. Eine notorisch bekannte, aus zwei Magnetbremsen 32 aufgebautes Blockiersystem A für eine Schwenkbewegung um die Z-Achse, ist im Unterteil 31 eingebaut. Die Position des Werkzeugs 3 des Manipulators 2 in bezug auf die Z-Achse wird durch einen elektrischen Winkelgeber 34 mit Rotor 33 in herkömmlicher Weise generiert und einem nicht näher dargestellten Speicher der programmierbaren Steuerung gemeldet.

Auf der Antriebswelle 30 befindet sich endseitig ein kleines Kegelrad 48, welches auf ein grosses Kegelrad 47 und ein weiteres mit einem Drehkopf 42 verbundenes kleines Kegelrad 48 wirkt.

In einem sogenannten Kipp-Kopf befindet sich eine Kipp-Kopf-Lagerung 39 mit zwei Blockiersystemen B und C. Das Blockiersystem B ist aus einer beweglichen Magnetbremse 35 und einer festen Magnetbremse 36 aufgebaut und das Blockiersystem C aus einer Hilfsblockierscheibe 37 mit zugehörigem Elektromagnet 38. Auf der gegenüberliegenden Seite einer Kippachse 51 befindet sich ein Winkelgeber 45 mit Rotor 46 für die Bestimmung der Kipp-Position.

Das Kegelrad 48 ist auf einer Drehachse 52 fixiert, auf welcher zentral ein Rotor 40 mit Winkelgeber 41 angeordnet ist. Zur Blockierung der Drehbewegung dient ein Blockiersystem D, wiederum gebildet aus zwei Magnetbremsen 50. Die Dreh-Kopf-Lagerung 49 ist in gewohnter Weise spielfrei ausgebildet.

Der vorstehend beschriebene Manipulator 2, vgl. Fig. 4, vermag Schwenkbewegungen in einem Winkelbereich von 360 Grad (Vollkreis) um die Z-Achse auszuführen. Kipp-Bewegungen sind in einem Winkelbereich von ± 100 Grad von der Z-Achse aus gemessen und Drehbewegungen in einem Winkelbereich von eben-

- 10 -

falls ± 100 Grad um die Horizontalachse möglich.

Anhand nachstehender Funktionstabelle lassen sich die notwendigen Steuerbefehle für den Manipulator 2 leicht herauslesen, womit dessen Funktionsweise ebenfalls erklärt ist.

| Blockier-system<br>Bewegung | A | B | C | D |
|---|---|---|---|---|
| Schwenken | 0 | 1 | 1 | 1 |
| Drehen | 1 | 1 | 0 | 0 |
| Kippen | 1 | 0 | 1 | 1 |

0  =  Blockierung ausgeschaltet

1  =  Blockierung wirksam

Das erfindungsgemässe Verfahren sowie deren Einrichtungen
sind in bezug auf die zu bearbeitenden bzw. zu montierenden
Werkstückgrössen sehr anpassungsfähig. Daraus resultiert ein
relativ kleiner produktionsgebundener Anteil im Verhältnis
zur Gesamtinvestition, insbesondere bei Produktionsumstellungen.

Das erfindungsgemässe Verfahren sowie deren Einrichtungen
sind in bezug auf die zu bearbeitenden bzw. zu montierenden
Werkstückgrössen sehr anpassungsfähig. Daraus resultiert ein relativ kleiner produktionsgebundener Anteil im Verhältnis
zur Gesamtinvestition, insbesondere bei Produktionsumstellungen.

Schäfer/Seckler 6032 EPA

0076231

- 12 -


Patentansprüche

————————————————————


1. Verfahren zur seriellen Bearbeitung und/oder Montage von aus Einzelteilen aufgebauten Werkstücken (14), wobei eine Einrichtung die Einzelteile (11) zubringt, eine programmierbare Übergabe/Montageeinheit (1) mit mindestens drei Freiheitsgraden vorhanden ist und eine Werkstückträgervorrichtung (13) taktmässig gesteuert wird, dadurch gekennzeichnet, dass die Einzelteile in einer geordneten und gerichteten Lage einer Entnahmestation zugeführt werden, dass hier die gerichteten Teile von einem Manipulator (2) der Übergabe/Montageeinheit (1) entnommen und positionsrichtig in der Reihenfolge der Bearbeitungs- und/ oder Montageschritte an die Werkstückträgervorrichtung (13) abgegeben werden, wobei sich die Einrichtung zur Zubringung der Einzelteile (11) entlang zur taktmässig gesteuerten Werkstückträgervorrichtung (13) erstreckt. (Fig. 1, Fig. 2)

2. Verfahren zur seriellen Bearbeitung und/oder Montage von aus Einzelteilen aufgebauten Werkstücken (14), wobei eine Einrichtung die Einzelteile (11) zubringt, eine programmierbare Übergabe/Montageeinheit (1) mit mindestens drei Freiheitsgraden vorhanden ist und eine Werkstückträgervorrichtung (13) taktmässig gesteuert wird, dadurch gekennzeichnet, dass die Einzelteile in einer geordneten und gerichteten Lage, taktmässig, periodisch wiederholend in jeweils einer Palette (12) mit einer Anzahl von mindestens n-gleichen Einzelteilen in wenigstens einer Arbeitsstrecke und wenigstens einer Entnahmestation zugeführt werden, dass diese Einzelteile positionsrichtig in der Reihenfolge der Bearbeitungs- und/oder Montageschritte angeordnet werden, wobei n der Anzahl der in Betrieb stehenden Arbeitsstellen der taktmässig gesteuerten Werkstückträgervorrichtung (13) entspricht. (Fig. 1, Fig. 2)

3. Verfahren nach Anspruch 1 und 2, dadurch gekennzeichnet, dass zwei zueinander gegenseitig paralelle Einrichtungen die Einzelteile (11) beidseitig der Werkstückträgervorrichtung (13) zubringen.

4. Verfahren nach Anspruch 1, 2 oder 3, dadurch gekennzeichnet, dass die Werkstücke (14) nach Beendigung der vorgegebenen Bearbeitung und/oder Montage durch den Manipulator (2) der Übergabe/Montageeinheit (1) von der Werkstückträgervorrichtung (13) zur weiteren Bearbeitung und/oder zur definitiven Palettisierung verbracht werden. (Fig. 1, Fig. 2)

5. Verfahren nach Anspruch 1, 2 oder 3, dadurch gekennzeichnet, dass das Werkstück (14), nach Vollendung sämtlicher Arbeitsvorgänge durch den Manipulator (2) der Übergabe/Montageeinheit (1) an die Entnahmestation zurückgeführt wird und/oder in geordneter Lage in die Einrichtung zur Zubringung der Einzelteile (11) zugeführt wird.(Fig. 1, Fig. 2)

6. Einrichtung zur Durchführung des Verfahrens nach Anspruch 1 oder 2, dadurch gekennzeichnet, dass die Werkstückträgervorrichtung (13) eine umlaufende Takteinrichtung mit wenigstens zwei identischen Werkstückträgern (15) ist. (Fig. 1, Fig. 3)

- 14 -

7. Einrichtung nach Anspruch 6, dadurch gekennzeichnet, dass in der Übergabe/Montageeinheit (1) wenigstens zwei, einzeln einschaltbare Werkzeuge (3) vorgesehen sind. (Fig. 1, Fig. 5)

8. Einrichtung nach Anspruch 6 und/oder 7, dadurch gekennzeichnet, dass peripher zur Werkstückträgervorrichtung (13) Prüf-, Mess- und/oder Bearbeitungsstationen (17) sowie Einrichtungen für Verfahrens- und Verbindungstechniken (18) angeordnet sind. (Fig. 1, Fig. 2)

9. Einrichtung nach Anspruch 6, 7 oder 8, dadurch gekennzeichnet, dass die Werkstückträgervorrichtung (13) wenigstens eine Position für die Verrichtung manueller Arbeitsgänge aufweist. (Fig. 1)

10. Einrichtung nach Anspruch 6, dadurch gekennzeichnet, dass die Werkstückträgervorrichtung (13) auswechselbar ausgestaltet ist. (Fig. 3)

11. Einrichtung nach einem der Ansprüche 6 bis 10, dadurch gekennzeichnet, dass der Manipulator (2) der Übergabe/Montageeinheit (1) eine steuerbare Klemmvorrichtung zur Einschaltung beliebiger Werkzeuge (3, 3', 3") aufweist. (Fig. 5)

12. Einrichtung nach einem der Ansprüche 6 bis 11, dadurch gekennzeichnet, dass die Übergabe/Montageeinheit (1) in ihrer Horizontalebene und in ihrer Vertikalebene durch Schlitten (4,5) geführt ist und dass deren Manipulator (2) sequentiell in vier weiteren Freiheitsgraden steuerbar ist. (Fig. 3, Fig. 4)

13. Einrichtung nach einem der Ansprüche 6 bis 12, dadurch

- 15 -

gekennzeichnet, dass die Uebergabe/Montageeinheit (1) einen Manipulator (2) aufweist, dessen Bewegungsabläufe sequentiell gesteuert und durch einzeln einschaltbare Blockiersysteme (A - D) kontrolliert sind. (Fig. 4, Fig. 5)

FIG.1

FIG.2

6032 PPS / Fk

0076231

0076231

FIG.3

6032 PPS / Fk

0076231

FIG.4

30
31
32
32
33
34

2

A

43
44

48

45

35
36

51

B

46

37
38

47

39

48
49
50
50
52

C
40
41

D

42

3            3

FIG.5